# EUROPÄISCHE PATENTANMELDUNG

(11) **EP 2 749 989 A2**
(43) Veröffentlichungstag der Anmeldung: **02.07.2014**
(21) Anmeldenummer: 13193350.9
(22) Anmeldetag: 18.11.2013
(51) Int. Cl.: G06F 1/32, G06F 3/01, G06F 3/03, G06F 3/0484, G06F 3/0488, G01B 7/02

(54) **Entfernungsgestützte Steuerung von Anzeige-Abstraktion und Interaktions-Modus**

(30) Priorität: 27.12.2012 DE 102012224394
(71) Anmelder: Siemens Aktiengesellschaft, 80333 München (DE)
(72) Erfinder: Eckl, Roland, 91301 Forchheim (DE); MacWilliams, Asa, 82256 Fürstenfeldbruck (DE)

(57) **Zusammenfassung**

Interaktionsgerät (10) umfassend:
- Ein Benutzerinterface (14) welches ein Ausgabegerät (54a) umfasst;
- einen Annäherungssensor (5);
- ein Logikmodul (12);
- eine Software (27), die auf dem Logikmodul ausführbar ist und die ausgestaltet ist, Daten von dem Annäherungssensor (5) auszuwerten und das Benutzerinterface (14) zu steuern;
- wobei der Annäherungssensor (5) ausgestaltet ist, eine Annäherung eines Anwenders in den Sichtbereich des Annäherungssensor (5) zu erfassen und
- wobei die Software ausgestaltet ist, anhand der erkannten Annäherung eine Informationsdarstellung auf dem Ausgabegerät (54a) anzupassen und die Informationsdarstellung bei sich verringernder Distanz des Anwenders zum Annäherungssensor (5) zu verfeinern.

## Beschreibung

Die vorliegende Erfindung bezieht sich auf das technische Gebiet der Anpassung einer Informationsdarstellung auf einem Interaktionsgerät.

Der aktuelle Stand der Technik erfordert in der Regel das manuelle Wechseln zwischen verschiedenen Darstellungsarten für Steuerung und Ausgabe. Typisch sind auch zeitgesteuerte Mechanismen, die ähnlich Bildschirmschonern nach einer definierten Zeitspanne ohne Interaktion selbständig in eine Informations-Anzeige wechseln. Bei der nächsten Interaktion (Mausbewegung, Bildschirmberührung, etc.), einem manuellen Schritt, wird wieder in den Steuermodus gewechselt.

Bekannt sind auch einfache Bewegungsmelder, welche ein System bei erkannter Person in der Umgebung aktivieren. Hierbei wird jedoch nicht zwischen Informations-Ausgabe und Steuerung unterschieden, das System wird lediglich aktiviert, dabei i.d.R. in einen Ausgabe-Modus versetzt. Für einen denkbaren Übergang in einen Steuerungsmodus würde dabei wieder ein manueller Schritt benötigt.

Es erfolgt jedoch keine Veränderung der Darstellung in Relation zum Anwender, ob dieser das Gerät von seinem aktuellen Aufenthaltsort aus überhaupt steuern kann, bzw. ob die dargestellten Informationen im Ausgabe-Modus sinnvoll zu erfassen sind.

Ebenfalls bekannt sind Systeme welche auf Annäherung hin ein Display aktivieren bzw. deaktivieren. Das bekannteste Beispiel hierfür sind Annäherungssensoren bei Mobiltelefonen. Diese schalten das Display (und die zugehörige berührungsempfindliche Fläche) ab, wenn man das Telefon nahe am Ohr hält. Dies soll vermeiden, dass versehentlich ein Steuerelement durch Berührung mit dem Körper beim ans Ohr halten aktiviert wird. Hierbei handelt es sich jedoch um eine rein binäre Funktion (an/aus) bei unmittelbarer Nähe und nicht auf andere Situationen erweiterbar. So ist in beiden Zuständen der Nutzer nahe am Gerät und somit in der Lage dieses theoretisch zu steuern.

Benutzerschnittstellen (Human-Machine-Interface, HMI) sind in der Regel auf ihre typische Nutzung hin optimiert. Sollen primär Eingaben möglich sein, so werden entsprechende Steuerelemente dargestellt. Ist jedoch vorrangig die Anzeige von Informationen gewünscht, so sind kaum bis keine Steuerelemente vorhanden, die Information tritt in den Vordergrund.

Der vorliegenden Erfindung liegt daher die Aufgabe zugrunde, ein Benutzer-Interface flexibel der Nutzung anzupassen.

Diese Aufgabe wird durch die in den unabhängigen Ansprüchen beschriebenen Lösungen gelöst. Vorteilhafte Ausgestaltungen der Erfindung sind in weiteren Ansprüchen angegeben.

Gemäß einem ersten Aspekt betrifft die Erfindung ein Interaktionsgerät, welches ein Benutzerinterface, einen Annäherungssensor, ein Logikmodul und eine Software umfasst. Das Benutzerinterface umfasst ein Ausgabegerät. Die Software ist auf dem Logikmodul ausführbar. Die Software ist ausgestaltet, Daten von dem Annäherungssensor auszuwerten und das Benutzerinterface zu steuern. Der Annäherungssensor ist zudem ausgestaltet, eine Annäherung eines Anwenders in den Sichtbereich des Annäherungssensors zu erfassen. Die Software ist ausgestaltet, anhand der erkannten Annäherung eine Informationsdarstellung auf dem Ausgabegerät anzupassen, und die Informationsdarstellung bei sich verringernder Distanz des Anwenders zum Annäherungssensor zu verfeinern.

Gemäß einem weiteren Aspekt betrifft die Erfindung ein Verfahren zum Anpassen einer Informationsdarstellung auf einem Interaktionsgerät. Dabei wird eine Distanz eines Anwenders zu dem Interaktionsgerät durch das Interaktionsgerät erfasst. Danach wird eine Informationsdarstellung auf dem Interaktionsgerät der erfassten Distanz durch das Interaktionsgerät automatisch angepasst. Dabei wird die Informationsdarstellung bei sich verringernder Distanz des Anwenders automatisch verfeinert.

Die Erfindung wird nachfolgend anhand eines Ausführungsbeispieles im Zusammenhang mit den Figuren ausführlicher erläutert. Dabei zeigen:
- Figur 1: ein Blockdiagramm eines Interaktionsgeräts für eine Gebäudeinfrastruktur;
- Figur 2: eine Ansicht des Interaktionsgerätes von Figur 1 zusammen mit einer Unterputzdose;
- Figuren 3A-3F: einen Aufsatz mit Darstellungen verschiedener Modi anhand einer Klima-Steuerung; und
- Figur 4A-4C: Aufsätze, bei denen weitere Programme im Steuerungsmodus seitlich angeboten werden.

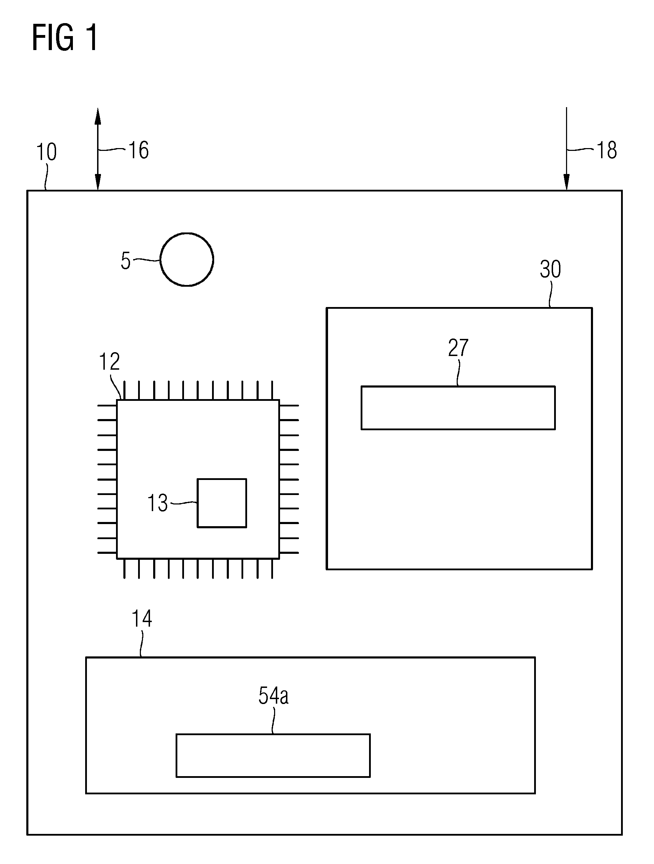

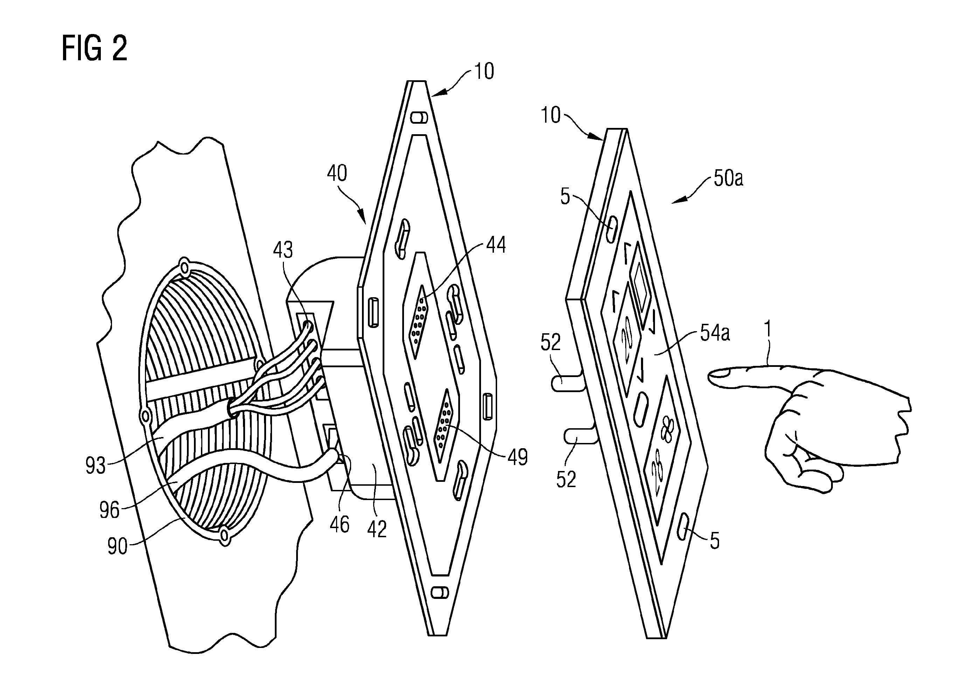

Figuren 1 und 2 zeigen ein Interaktionsgerät 10 das ausgestaltet und/oder adaptiert ist eine Gebäudeinfrastruktur zu steuern. Das Interaktionsgerät 10 umfasst ein Benutzerinterface 14, einen Annäherungssensor 5, ein als Prozessor oder Rechnersystem ausgestaltetes Logikmodul 12 und eine Software 27, die auf dem Logikmodul 12 ausführbar ist. Das Benutzerinterface 14 umfasst als Ausgabegerät ein berührungsempfindliches Display 54a. Die Software 27 ist ausgestaltet, Daten von dem Annäherungssensor 5 auszuwerten und das Benutzerinterface 14 zu steuern. Der Annäherungssensor 5 ist ausgestaltet, eine Annäherung eines Anwenders 1 in den Sichtbereich des Annäherungssensor 5 zu erfassen. Die Software ist ausgestaltet, anhand der erkannten Annäherung eine Informationsdarstellung auf dem Ausgabegerät 54a anzupassen und die Informationsdarstellung bei sich verringernder Distanz des Anwenders zu verfeinern.

Synonym für den Begriff "Annäherungssensor" wird im Rahmend dieser Anmeldung auch der Begriff "Annäherungs-/Distanz-Sensor" verwendet.

Gemäß einer bevorzugten Ausführungsform umfasst das Erfassen einer Annäherung des Anwenders 1 das Feststellen einer Distanz zwischen dem Interaktionsgerät 10 und dem Anwender 1.

Gemäß einer weiteren bevorzugten Ausführungsform ist die Software ausgestaltet, Eingaben via ein Eingabegerät entgegen zu nehmen. Da in dem in Figur 1 dargestellten Ausführungsbeispiel das Ausgabegerät ein berührungsempfindliches Display 54a ist, ist das Ausgabegerät gleichzeitig Eingabegerät. In weiteren Ausführungsformen umfasst das Benutzerinterface alternative oder zusätzlich zu dem berührungsempfindlichen Display als Eingabegräte ausgebildete mechanische Knöpfe, Buttons und/oder Schalter.

Das Eingabegerät 54a und das Ausgabegerät sind dabei vorteilhaft miteinander integriert, entweder in einem kombinierten Gerät (etwa TouchPanel, berührungsempfindlicher Bildschirm) oder durch örtliche Nähe zueinander, z.B. physikalische Schaltelemente in Form von Knöpfen, Schaltern, etc. neben oder um das Ausgabegerät.

Der Annäherungs-/Distanz-Sensor erfasst kontinuierlich Objekte in seinem Erfassungsbereich. Hierfür können verschiedene Technologien zum Einsatz kommen, etwa:
- Ultraschall-Sensoren;
- Infrarot-Sensoren;
- Wärme-Kameras;;
- Video-Kameras
- 3D-Rekonstruktions-Geräte (vgl. Microsoft Kinect: http://www.xbox.com/de-DE/Kinect).

Je nach Sensor können qualitativ unterschiedlich Sensorwerte erfasst werden. Eine Schwierigkeit stellt hierbei auch das Unterscheiden von Personen und Gegenständen dar. Hierbei können jedoch Objekte, welche längere Zeit regungslos verharren, evt. als Gegenstand klassifiziert und "ausgeblendet" werden. Gemäß einer weiteren bevorzugten Ausführungsform ist die Software 27 ausgestaltet ist, ein Objekt, welches längere Zeit regungslos verharrt, als Gegenstand zu klassifizieren und dieses daher nicht als Anwender 1 zu interpretieren. Die Sensoren müssen jedoch nicht zwingend primär Bewegung erkennen, sondern bis zu einem gewissen Grad die Distanz zwischen Sensor und Nutzer/Objekt.

Zur Verbesserung der gewonnen Sensordaten können auch verschiedene Sensoren miteinander kombiniert werden.

Gemäß einer bevorzugten Ausführungsform umfasst die Anpassung der Informationsdarstellung eine Anpassung einer Anzeige-Abstraktion. Bewegt sich ein Anwender in den Sichtbereich des Annäherungs-/Distanz-Sensors 5, so wird zuerst das Ausgabegerät 54a aktiviert, etwa aus dem Stromsparmodus aufgeweckt. Das Interaktionsgerät 10 beginnt dabei mit einem groben Informations-Modus. Mit verringerter Distanz zwischen Interaktionsgerät 10 und Nutzer wird dabei die InformationsDarstellung in beliebigen diskreten Stufen oder auch stufenlos verfeinert. Die Abstraktion der Ausgabe-Darstellung nimmt also mit Verringerung des Abstands ab.

In direkter Nähe zum Interaktionsgerät 10 - hier ist es wahrscheinlich, dass der Nutzer 1 nun tatsächlich mit dem Gerät interagieren könnte - wechselt das Interaktionsgerät 10 in den Steuerungs-Modus. Die Ausgaben sind nun daraufhin optimiert, dass der Nutzer mit dem Interaktionsgerät 10 interagiert. Dies umfasst beispielsweise das Auswählen, Manipulieren, Wechseln von Steuer-Elementen. Die Anpassung der Informationsdarstellung umfasst somit eine Anpassung eines Interaktions-Modus.

Bevorzugte Ausführungsformen der Erfindung lösen daher das Problem, wie das Benutzer-Interface flexibel der Nutzung angepasst werden kann, indem es automatisch zwischen Steuerung und verschiedenen Ausgabe-Darstellungen wechselt.

Hierbei wird zugrunde gelegt, dass ein Anwender 1 nur in unmittelbarer Nähe zum Interaktionsgerät 10 dieses direkt steuern kann. Mit gewisser Distanz ist lediglich das Betrachten des Benutzerinterfaces 14 möglich. Die Anzeige von Steuerelementen ist daher unnötig und platzraubend. Hierbei ist es wünschenswert den Fokus eher auf Anzeige von Informationen zu verschieben. Darüber hinaus ist es wünschenswert die Fülle an Informationen mit zunehmender Entfernung zu reduzieren, da das menschliche Auge mit zunehmender Distanz die dargestellten Informationen nicht mehr vollständig auflösen kann. Ist der Anwender 1 gar vollständig außerhalb des Sichtbereichs des Gerätes, so kann dieses darüber hinaus Energie sparen und das Benutzerinterface 14 deaktivieren.

Es ergeben sich daraus also folgende 3 Modi:
(1) Offline-/Stromspar-Modus, das Ausgabegerät (oder auch das zugehörige Gesamtgerät) ist deaktiviert bzw. in einem Stromspar-Modus;
(2) Informations-Modus (mit Abstraktionsniveaus), das Ausgabegerät stellt ausschließlich Informationen dar;
(3) Steuerungs-Modus, das Ausgabegerät zeigt Elemente zur Unterstützung der Eingabe.

Der Informations-Modus kann hierbei verschiedene Abstraktionsniveaus aufweisen, wechselnd in Schritten oder fließend, in Abhängigkeit zur Distanz zwischen Anwender und Gerät.

Das Logikmodul 12 bereitet also die Sensorwerte dergestalt auf, dass der entsprechende Modus feststeht, sowie innerhalb des Informations-Modus der Grad an Abstraktion (z.B. in Prozent, wobei 100% der gröbsten Darstellung entspricht).

Figur 2 zeigt den Aufbau eines App-basierten Interaktionsgerätes 10 für eine Unterputzdose 90, hier mit aufsteckbarem Display 54a. Das Interaktionsgerät 10 umfasst das Basisgerät 40 für die Unterputzdose 90, sowie den Aufsatz 50a. Der Aufsatz 50a umfasst eine oder mehrere Befestigungskrallen 52, das Touch-Display 54a.

Das Basisgerät 40 umfasst eine Buchse 44 für die Ansteuerung des Displays 54a, eine Buchse 49 für die Ansteuerung weiterer Elemente auf anderen aufsteckbaren Aufsätzen wie für mechanische Schalter, ein Gehäuse 42 in welchem ein Kommunikationsmittel untergebracht ist. Das Kommunikationsmittel umfasst das Logikmodul 12, eine Funkeinheit, und allfällige weitere Komponenten. Zudem umfasst das Basisgerät 40 eine Busklemme 43, an welche ein Anschlusskabel 93 für ein Gebäudesteuerungsbussystem 63 anschließbar ist. Auch umfasst das Basisgerät 40 eine weitere Klemme 46, an welche ein weiteres Anschlusskabel 96 für ein Datennetzwerk anschließbar ist.

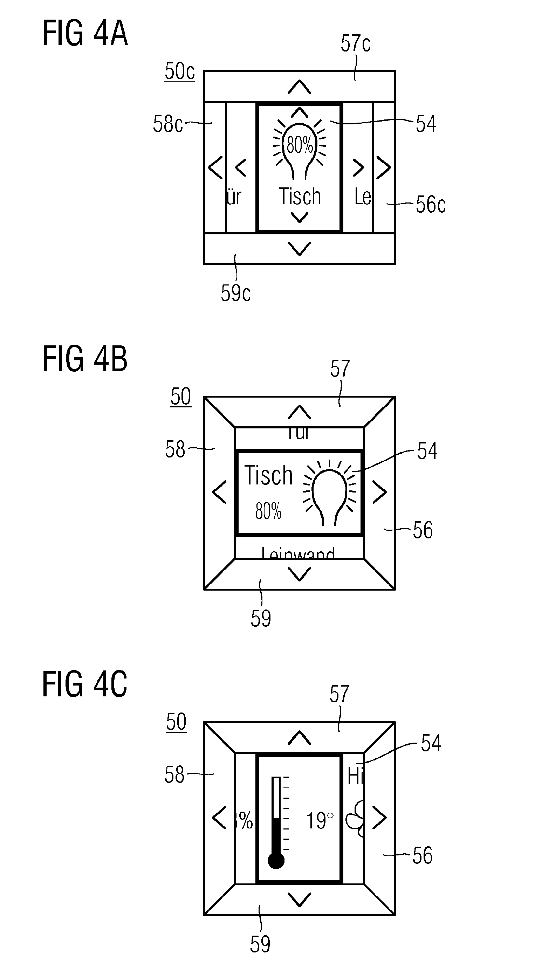

Das Interaktionsgerät 10 selbst ist vorzugsweise in die Unterputzdose 90 verbaubar. Der Anwender 1 sieht nur das Touch-display 54a auf dem Aufsatz 50a. Das Interaktionsgerät und insbesondere dessen Benutzerinterface kann geändert werden, indem man einen anderen Aufsatz beispielsweise einen der Aufsätze 50, 50c wie in Figuren 4A-4C beschrieben auf das Basisgerät aufsteckt.

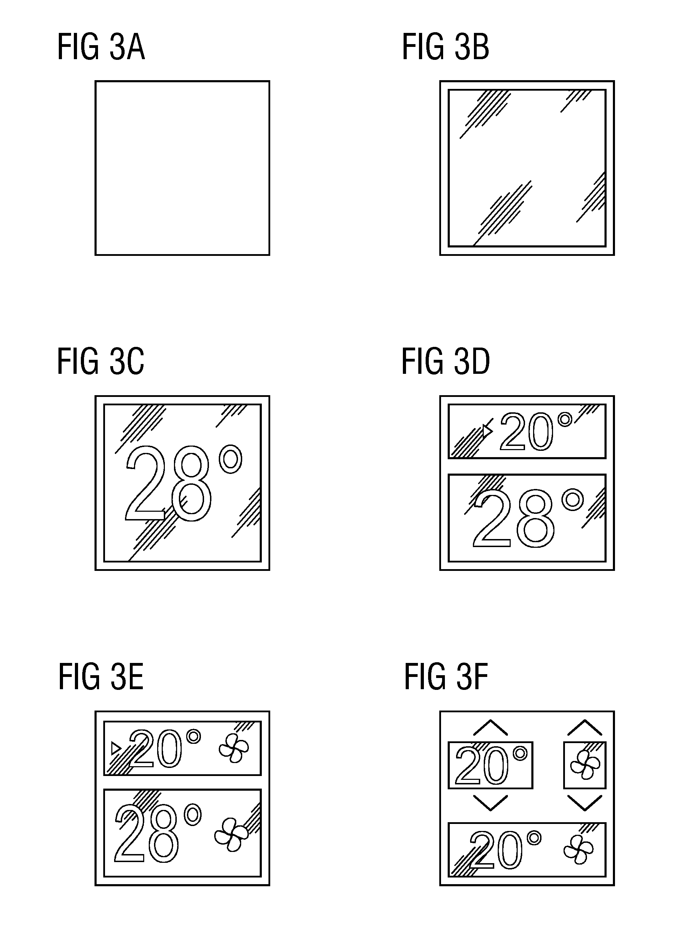

Die Figuren 3A-3F zeigen anhand einer Klima-Steuerung für verschiedene Modi verschiedene Informationsdarstellungen, welche auf dem Touchdisplay 54a abhängig von der Distanz eines Anwenders 1 zu dem Interaktionsgerät 10 durch das Interaktionsgerät angepasst und bei sich bei sich verringernder Distanz stets verfeinert werden. Dabei zeigt:
Figur 3A: Kein Anwender in Sichtweite: Ausgabegerät 54a aus;
Figur 3B: Der Anwender 1 ist zehn Meter vom Interaktionsgerät 10 entfernt: Das Ausgabegerät 54a zeigt lediglich über eine Farbkodierung an, ob aktuell die Zieltemperatur vorherrscht, z.B. Blau für "zu kalt", rot für "zu warm" und grün für "Zieltemperatur herrscht vor";
Figur 3C: Der Anwender 1 tritt auf 5 Meter an das Interaktionsgerät 10 heran: Das Ausgabegerät 54a zeigt bildschirmfüllend die aktuelle Temperatur mit Farbkodierung;
Figur 3D: Der Anwender 1 tritt auf 3 Meter an das Interaktionsgerät 10 heran: Das Ausgabegerät 54a zeigt die aktuelle sowie darüber die Zieltemperatur an;
Figur 3E: Der Anwender 1 tritt auf 1,5 Meter an das Interaktionsgerät 10 heran: Das Ausgabegerät 54a zeigt die eingestellte Ventilator-Stärke an, ggf. bei Automatik auch die aktuelle Stärke;
Figur 3F: Der Anwender 1 tritt direkt vor das Interaktionsgerät 10: Das Ausgabegerät 54a zeigt die aktuelle Temperatur sowie die aktuelle Ventilator-Stärke kleiner an (in der Abbildung nun unten). Die Zieltemperatur und der Ventilator-Modus werden groß dargestellt, kombiniert mit Pfeilen für den Wechsel.

Der Steuerungsmodus kann dabei auch lediglich den Wechsel zwischen verschiedenen darzustellenden Informationen oder Programmen beinhalten.

Beispiel: Erst wenige Zentimeter vor dem Gerät, etwa bei Annäherung mit dem Finger, werden andere Informationen/Programme seitlich auf einem Touchscreen angezeigt (sie ragen quasi ins Bild etwas hinein); durch "Wischen" am Bildschirm schiebt man nun die entsprechenden Informationen/Programme in den Mittelpunkt. Nimmt man den Finger weg, so entfernen sich die seitlichen Elemente wieder. Dies ist in den Figuren 4A-4C verdeutlicht.

Figur 4A zeigt eine Aufsatz 50c, wobei eine App zur Auswahl einzelner Lichter mittels der rechteckigen Schalter 56c, 57c, 58c, 59c und dem Display 54 ausgeführt wird. Die gewünschten Lichter (z.B. Licht beim Tisch) lassen sich durch die horizontalen Schalter 56c, 58c auswählen, die Intensität des ausgewählten Lichtes lassen sich durch die vertikalen Tasten 57c, 59c auswählen.

Figur 4B zeigt den Aufsatz 50, wobei eine App zur Auswahl einzelner Lichter mit den trapezförmigen Schaltern 56, 57, 58, 59 und dem Display 54 ausgeführt wird. Im Gegensatz zu der in Figur 3A dargestellten Ausführungsform, wird in Figur 3B jedoch eine App ausgeführt, bei welcher sich das gewünschte Licht durch die vertikalen Schalter 57, 58 auswählen lässt, während die Intensität des Lichts sich durch die horizontalen Schalter 56, 58 auswählen lässt.

Figur 4C zeigt den Aufsatz 50, wobei eine App zur Regelung der Temperatur, Luftfeuchtigkeit und Lüftung ausgeführt wird. Mit Hilfe der Schalter 56, 57, 58, 59 lassen sich die Temperatur, Luftfeuchtigkeit oder Lüftung und die betreffenden Soll-Werte dafür einstellen. Das Display zeigt die jeweilige Auswahl und den jeweiligen Zielwert an.

Optional kann auch die Richtung des Anwenders in Relation zum kombinierten Aus-/Eingabegerät berücksichtigt werden. Steht der Anwender z.B. vor dem Interaktionsgerät und bewegt die Hand am rechten Rand des Interaktionsgerätes, so können Steuer-Elemente beim Wechsel vom reinen Informations-Modus in den Steuer-Modus vorrangig rechts dargestellt werden. (Evt. nur auf berührungsempfindlichen Bildschirmen sinnvoll.)

Bevorzugte Ausführungsformen bestehen aus der vorteilhaften Kombination folgender Funktionen:
- Feststellen von Distanz zwischen Gerät und Anwender;
- Verarbeiten der Distanzwerte in Modus und ggf. Abstraktionsniveau;
- Aufbereiten der Benutzer-Schnittstelle gemäß Modus und ggf. Abstraktionsniveau.

Die Vorteile dieser Lösung sind:
- Reduktion der Komplexität des Benutzer-Interfaces mit zunehmender Distanz.
- Wichtige Informationen können auch aus großer Distanz erfasst werden;
- Anzeige von Steuerelementen zur Eingabe nur wenn der Nutzer tatsächlich in der Lage ist von seiner aktuellen Position aus zu steuern;
- Kostenersparnis und geringerer Platzbedarf gegenüber herkömmlichen Lösungen, bei der z.B. eine LED für eine aus der Ferne ablesbare Statusanzeige mit einem Touch-Display für die Steuerung kombiniert wird;
- Kostenersparnis durch Stromspar-/Offline-Modus, wenn sich kein Nutzer in der Nähe befindet. Displays können deaktiviert werden.

Die vorgeschlagene Steuerung kann in diverse Geräte verbaut werden, welche zur Ein-/Ausgabe vorgesehen sind. Dies kann sowohl Erweiterungen traditioneller Desktop- oder Tablet-Rechner darstellen, aber auch Info-Karussell-Systeme, Info-Terminals, HMI-Schnittstellen für Produktionsgeräte, usw.

Insbesondere ist auch eine Ausprägung für display-gestützte Interaktionsgeräte in der Gebäudesteuerung denkbar, wie in Figur 2 gezeigt, welche eine Ausprägung mit Steckaufsatz 50 für Unterputz-Steuergerät 10 zeigt. Die Näherungssensoren 5 sind in einem Steckaufsatz 50 mit einem Touchscreen 54a verbunden.

Gemäß bevorzugten Ausführungsformen wechselt je nach Entfernung des Benutzers ein Interaktionsgerät 10 im Gebäude zwischen verschiedenen Anzeigeabstraktionen und Interaktionsmodi. Beispiel Heizungs- und Klimasteuerung im Raum in einem Unterputzgerät: Wenn kein Benutzer im Raum ist, ist das Gerät aus. Wenn ein Benutzer 10 m entfernt ist, erscheint die ganze Anzeige nur in einer Farbe, z.B. Blau für "zu kalt", rot für "zu warm" und grün für "Zieltemperatur erreicht". Je näher der Benutzer an das Gerät kommt, desto mehr Informationen erscheinen: die aktuelle Temperatur, die Zieltemperatur, der Lüftungsmodus. Kommt er in Hand-Reichweite des Geräts, erscheinen Bedienelemente (z.B. Pfeile) zum Verstellen der Zieltemperatur und des Lüftungsmodus. Dabei wird ein Näherungssensor verwendet.

Die Erfindung findet vorzugsweise In komplexeren Gebäudesteuerungs-Interaktionsgeräten Anwendung. Weitere Anwendungsmöglichkeiten sind bei Verkaufsautomaten (z.B. für Fahrkarten), Informations-Kiosken (in Bahnhöfen oder Flughäfen) oder bei Werbetafeln.

## Patentansprüche

1. Interaktionsgerät (10) umfassend:
- Ein Benutzerinterface (14) welches ein Ausgabegerät (54a) umfasst;
- einen Annäherungssensor (5);
- ein Logikmodul (12);
- eine Software (27), die auf dem Logikmodul ausführbar ist und die ausgestaltet ist, Daten von dem Annäherungssensor (5) auszuwerten und das Benutzerinterface (14) zu steuern;
- wobei der Annäherungssensor (5) ausgestaltet ist, eine Annäherung eines Anwenders in den Sichtbereich des Annäherungssensor (5) zu erfassen und
- wobei die Software ausgestaltet ist, anhand der erkannten Annäherung eine Informationsdarstellung auf dem Ausgabegerät (54a) anzupassen und die Informationsdarstellung bei sich verringernder Distanz des Anwenders zum Annäherungssensor (5) zu verfeinern.

2. Interaktionsgerät (10) nach Anspruch 1,
wobei die Anpassung der Informationsdarstellung eine Anpassung einer Anzeige-Abstraktion umfasst.

3. Interaktionsgerät (10) nach einem der vorhergehenden Ansprüche,
wobei die Anpassung der Informationsdarstellung eine Anpassung eines Interaktions-Modus umfasst, wobei die Anpassung des Interaktionsmodus vorzugsweise einen Wechsel zwischen den folgenden Modi oder einer Auswahl der folgenden Modi umfasst:
- Ein Offline-/Stromspar-Modus, bei dem das Ausgabegerät deaktiviert oder in einem Stromspar-Modus ist;
- Ein Informations-Modus, bei dem das Ausgabegerät ausschließlich Informationen dar stellt;
- Ein Steuerungs-Modus, bei dem das Ausgabegerät Elemente zur Unterstützung der Eingabe zeigt.

4. Interaktionsgerät (10) nach einem der vorhergehenden Ansprüche,
wobei das Erfassen einer Annäherung des Anwenders (1) das Feststellen einer Distanz zwischen dem Interaktionsgerät (10) und dem Anwender (1) umfasst.

5. Interaktionsgerät (10) nach einem der vorhergehenden Ansprüche,
wobei das Interaktionsgerät (10) ausgestaltet und/oder adaptiert ist eine Gebäudeinfrastruktur zu steuern.

6. Interaktionsgerät (10) nach einem der vorhergehenden Ansprüche,
wobei das Ausgabegerät (54a) ein Display umfasst und anhand der erkannten Annäherung die Informationsdarstellung auf dem Display angepasst wird.

7. Interaktionsgerät (10) nach einem der vorhergehenden Ansprüche, wobei das Benutzerinterface (14) ein Eingabegerät (54a) umfasst und die Software ausgestaltet ist und Eingaben via dem Eingabegerät entgegen zu nehmen, wobei das Eingabegerät vorzugsweise Knöpfe, Buttons, Schalter und/oder mindestens eine zu einem Display gehörende berührungsempfindliche Oberfläche umfasst.

8. Interaktionsgerät (10) nach einem der vorhergehenden Ansprüche,
wobei die Software (27) ausgestaltet ist, ein Objekt, welches längere Zeit regungslos verharrt, als Gegenstand zu klassifizieren und dieses daher nicht als Anwender (1) zu interpretieren.

9. Verfahren zum Anpassen einer Informationsdarstellung auf einem Interaktionsgerät (10) umfassend die Verfahrensschritte:
- Erfassen einer Distanz eines Anwenders (1) zu dem Interaktionsgerät (10) durch das Interaktionsgerät (10);
- Automatisches Anpassen der Informationsdarstellung auf dem Interaktionsgerät (10) durch das Interaktionsgerät (10) anhand der erfassten Distanz, wobei die Informationsdarstellung bei sich verringernder Distanz des Anwenders (1) verfeinert wird.

10. Verfahren nach Anspruch 9,
wobei die Anpassung der Informationsdarstellung eine Anpassung einer Anzeige-Abstraktion umfasst.

11. Verfahren nach Anspruch 9 oder 10,
wobei die Anpassung der Informationsdarstellung eine Anpassung eines Interaktions-Modus umfasst, wobei die Anpassung des Interaktionsmodus vorzugsweise einen Wechsel zwischen den folgenden Modi oder einer Auswahl der folgenden Modi umfasst:
- Ein Offline-/Stromspar-Modus, bei dem das Ausgabegerät deaktiviert oder in einem Stromspar-Modus ist;
- Ein Informations-Modus, bei dem das Ausgabegerät ausschließlich Informationen dar stellt;
- Ein Steuerungs-Modus, bei dem das Ausgabegerät Elemente zur Unterstützung der Eingabe zeigt.

12. Verfahren nach einem der Ansprüche 9-11,
wobei das Interaktionsgerät (10) ausgestaltet und/oder adaptiert ist, eine Gebäudeinfrastruktur zu steuern.

13. Verfahren nach einem der Ansprüche 9-12,
wobei das Interaktionsgerät (10) ein Display umfasst und anhand der erkannten Annäherung die Informationsdarstellung auf dem Display angepasst wird.

14. Verfahren nach einem der Ansprüche 9-13,
wobei das Interaktionsgerät (10) Knöpfe, Buttons, Schalter und/oder mindestens eine zu einem Display gehörende berührungsempfindliche Oberfläche umfasst.

15. Verfahren nach einem der Ansprüche 9-14,
wobei Objekte, welche längere Zeit regungslos verharren, durch das Interaktionsgerät (10) automatisch als Gegenstand klassifiziert und daher nicht als Anwender zu interpretiert werden.
